# EUROPEAN PATENT APPLICATION

(11) **EP 1 600 914 A1**
(43) Date of publication of application: **30.11.2005**
(21) Application number: 04712690.9
(22) Date of filing: 19.02.2004
(51) Int. Cl.: G09F 9/00, G06F 1/00, G06F 3/033

(54) **GUARD-EQUIPPED IMAGE DISPLAY DEVICE**

(30) Priority: 20.02.2003 JP 2003042687
(71) Applicant: Shimane Prefecture, Matsue-shi, Shimane 690-8501 (JP)
(72) Inventor: IZUMI, K., c/o Shimane Inst. for Ind. Technology, Shimane 690-0816 (JP)
(74) Representative: Vossius & Partner
(86) International application number: PCT/JP2004/001883
(87) International publication number: WO 2004/075146

(57) **Abstract**

The present invention is to provide an image display device ensuring that erroneous operation of an input means arranged at one or both of a front center and a periphery of a display unit is prevented. The display unit (1) is supported by a stand (2). The input means for performing input for changing a display image displayed on a display screen (S) of the display unit (1) through a control device (15) is arranged one or both of the display screen (S) and a periphery (4) of the display unit (1). A guard (31) for preventing erroneous operation of the input means is arranged to protrude so as to provide a predetermined interval between the guard and the front surface of the display unit (1). The upper limit of a height of the guard (31) is set so as not to interfere with view of a user viewing the display screen (S) from the front.

## Description

### TECHNICAL FIELD

This invention relates to a guard-equipped image display device having a display unit with an input means arranged at a frame side or a display screen side to perform, by touching, input for operation of changing a display image, wherein a guard for preventing erroneous operation of the input means is mounted to the display unit.

### BACKGROUND ART

Conventionally, as disclosed in Japanese Patent Laid-open No. 2002-300601, a virtual reality image display system for displaying a virtual reality image such as a panoramic virtual reality three-dimensional image obtained by reproduction of a pseudo three-dimensional space based on a spherical panoramic image, and a three-dimensional image etc. obtained by reproduction of a real three-dimensional space composed of X, Y and Z axes is known per se as one image display device.

The above virtual reality image display system ensures that a touch panel function is provided for a display, as an input means for moving or changing a virtual reality image. Further, the above display has a display screen of a size enough to cover an approximately whole view for a viewer face-to-face viewing the display within a specific operational area given as a range of an operator position where touch panel operation may be put into effect.

Using the above system to display the virtual reality image on the display screen of the display causes viewer's frontward attention to be almost all turned to an image displayed on the display. Then, the viewer or an operator makes touch with the display screen (touch panel operation) to permit a viewpoint changed virtual reality image to be displayed on the display screen. Thus, the viewer may view the virtual reality image providing a full presence or operate the virtual reality image with the full presence.

However, the viewer's frontward attention is almost all turned to the image displayed on the display. Thus, the viewer, when also serving as the operator viewing the virtual reality image while operating the virtual reality image display system, becomes often neglectful taking care about one's hand opposite to one's hand engaged in the touch panel operation, before one knows. In particular, the above viewer is most liable to rest one's hand on a different level portion between the display screen of the display having the touch panel function and a frame of the display.

Thus, a case exists where the viewer's (also serving as the operator) body or hand not engaged in the touch panel operation contacts the display screen, particularly, a lower limit portion specified as a boundary between the frame and the display screen, before one knows. In this case, a touch panel becomes activated for switching to a virtual reality image being not in accord with the intention of the above viewer, resulting in problems of occurrence of events such as switching between virtual reality contents independently of the viewer's intention, and a failure to perform operations such as spatial movement and object rotation.

Further, when a wheeled chair user or a lower age group user effects the touch panel operation from a lower position, contact between the user and not only the different level portion between the display screen of the display and the frame of the display, but also portions other than a portion to be originally touched occurs, which then brings about switching to the virtual reality image being not in accord with the viewer's intention, resulting in the problems of occurrence of the events such as the switching between the virtual reality contents independently of the viewer's intention, and the failure to perform the operations such as the spatial movement and the object rotation, like the above.

A primary object of the present invention for solving the above problems is to provide a guard-equipped image display device ensuring that erroneous operation of an input means arranged at a display unit is prevented with a guard arranged to protrude forwards from a front surface of the display unit, thereby eliminating disadvantages such as a change to an image being not in accord with the user's intention, and an input means-side breakage caused by contact with the input means by mistake.

### DISCLOSURE OF THE INVENTION

To solve the above problems, as a first feature, in an image display device that has a display unit 1 with a display screen S for displaying an image of a specific object, a control device 15 at least adapted to display the image on the above display screen S and also, to change the display image displayed on the display screen S, and a support 2 for supporting the display unit 1, and further includes an input means arranged at one or both of the display screen S and a periphery 4 of the display unit 1 to perform, by touching or in proximity, input for changing the display image through the control device 15, the present invention is characterized in that a guard 31 for preventing erroneous operation of the input means is mounted to the display unit 1 to protrude forwards from a front surface of the display unit, and the upper limit of a height of the guard 31 is set so as not to interfere with view on the display screen S when a user is viewing the display screen S from the front.

As a second feature, in an image display device that has a display unit 1 with a display screen S for displaying an image of a specific object, a control device 15 at least adapted to display the image on the display screen S and also, to change the display image displayed on the display screen S, and a support 2 for supporting the display unit 1, and further includes an input means arranged at one or both of the display screen S and a periphery 4 of the display unit 1 to perform, by touching or in proximity, input for changing the display image through the control device 15, the present invention is characterized in that a guard 31 for preventing erroneous operation of the input means is mounted to the display unit 1 to protrude forwards from a front surface of the display unit , the upper limit of a height of the guard 31 is set so as not to interfere with view on the display screen S when a user is viewing the display screen S from the front, the display screen S is in the form of a touch panel serving to detect touch of a predetermined touching object with or proximity thereof to the display screen S, and a locus of movement of the above object being in touch with or in close proximity to the display screen, and the input means is made up of the above touch panel.

As a third feature, in an image display device that has a display unit 1 with a display screen S for displaying an image of a specific object, a control device 15 at least adapted to display an image on the display screen S and also, to change the display image displayed on the display screen S, and a support 2 for supporting the display unit 1, and further includes an input means arranged at one or both of the display screen S and a periphery 4 of the display unit 1 to perform, by touching or in proximity, input for changing the display image through the control device 15, the present invention is characterized in that a guard 31 for preventing erroneous operation of the input means is mounted to the display unit 1 to protrude forwards from a front surface of the display unit, the upper limit of a height of the guard 31 is set so as not to interfere with view on the display screen S when a user is viewing the display screen S from the front, and the display unit 1 has the display screen S as large as a size of about 40 to 70 inches.

As a fourth feature, in an image display device that has a display unit 1 with a display screen S for displaying an image of a specific object, a control device 15 at least adapted to display the image on the display screen S and also, to change the display image displayed on the display screen S, and a support 2 for supporting the display unit 1, and further includes an input means arranged at one or both of the display screen S and a periphery 4 of the display unit 1 to perform, by touching or in proximity, input for changing the display image through the control device 15, the present invention is characterized in that a guard 31 for preventing erroneous operation of the input means is mounted to the display unit 1 to protrude forwards from a front surface of the display unit, the upper limit of a height of the guard 31 is set so as not to interfere with view on the display screen S when a user is viewing the display screen S from the front, the display screen S is in the form of a touch panel serving to detect touch of a prescribed touching object with or proximity thereof to the display screen S, and a locus of movement of the above object being in touch with or in close proximity to the display screen, the input means is made up of the above touch panel, and the display unit 1 has the display screen S as large as a size of about 40 to 70 inches.

As a fifth feature, the present invention is characterized in that the upper limit of the height of the guard 31 is set in position lower than the lower limit of the display screen S, with the display screen S turned in an approximately horizontal direction of the front.

As a sixth feature, the present invention is characterized in that the guard 31 is made up of a horizontal bar 32.

As a seventh feature, the present invention is characterized in that the guard 31 is made up of a horizontal bar 32, and the upper limit of the height of the bar 32 is set in position lower than the lower limit of the display screen S, with the display screen S turned in an approximately horizontal direction of the front.

As an eighth feature, the present invention is characterized in that the guard 31 is spaced from the display unit 1 by a predetermined distance so as to bring about no operation of the input means at the time when the user pushes out one's finger forwards with the guard 31 grasped, and also to prevent a person from stepping into a space between the guard 31 and the display unit 1.

As a ninth feature, the present invention is characterized in that the guard 31 is spaced from a front end surface of the display unit 1 by a distance of 5 to 20 cm so as to bring about no operation of the input means at the time when the user pushes out one's finger forwards with the guard 31 grasped, and also to prevent a person from stepping into a space between the guard 31 and the display unit 1.

As a tenth feature, the present invention is characterized in that the height of the guard 31 is set to ensure that the display unit 1 is arranged to have a height enough to permit a wheeled chair user to wheel to a space between the guard 31 and a floor surface G, and also to be adaptable to operate, by a standing user, the input means positioned at a highest level.

As an eleventh feature, the present invention is characterized in that the guard 31 is arranged in position within a space R2 defined between a plane spaced from the floor surface G by 65 cm and in parallel to the floor surface and a plane spaced from the floor surface G by 110 cm and in parallel to the floor surface to ensure that the display unit 1 is arranged to have a height enough to permit a wheeled chair user to wheel to a space between the guard 31 and the floor surface G, and also to be adaptable to operate, by a standing user, the input means positioned at a highest level.

As a twelfth feature, the present invention is characterized in that the support 2 is structured to support the display unit 1 to be capable of being swung to ensure that the display screen S is turned upward and downward.

As a thirteenth feature, the present invention is characterized in that the support 2 is structured to support the display unit 1 to be capable of being swung to ensure that the display screen S is turned upward and downward, and the guard 31 also serves as a handle for operation of swinging the display unit **1**.

As a fourteenth feature, in an image display device that has a display unit 1 with a display screen S for displaying an image of a specific object, a control device 15 at least adapted to display the image on the display screen S and also, to change the display image displayed on the display screen S, and a support 2 for supporting the display unit 1, and further includes an input means arranged at one or both of the display screen S and a periphery 4 of the display unit 1 to perform, by touching or in proximity, input for changing the display image through the control device 15, the present invention is characterized in that a guard 31 for preventing erroneous operation of the input means is mounted to the display unit 1 to protrude forwards from a front surface of the display unit, the upper limit of a height of the guard 31 is set so as not to interfere with view on the display screen S when a user is viewing the display screen S from the front, more than one interface 42 for display image operation is adapted to be displayed on the display screen S, the control device 15 is provided with a voice informing means 41 for giving, by voice, information on the contents of operations executed with the interfaces 42, and marks 43 representing the instruction contents of the operation executed with the interfaces 42 and being useful in giving information on the above instruction contents to a visually handicapped user are arranged at a location other than the input means so as to be correspondent to the respective interfaces 42.

As a fifteenth feature, the present invention is characterized in that the marks 43 are arranged at the guard 31.

As a sixteenth feature, the present invention is characterized in that the guard 31 is made up of a horizontal bar 32, and the marks 43 are arranged at a confronting position of the bar 32 to the display screen S to permit the interfaces 42 to be displayed in the vicinity of the edge of the lower limit of the display screen S.

As a seventeenth feature, the present invention is characterized in that a lateral width of the display screen S is set to be as large as a width enough to permit the interfaces 42 to be displayed in the arrangement of a horizontal row such that the interfaces are spaced and sized to permit the visually handicapped user to carry out the touch operation in such a manner as to discriminate between the interfaces 42 in the lateral direction.

### BRIEF DESCRIPTION OF THE DRAWINGS

FIG. 1 is a front perspective view showing an image display device of the present invention;
FIGS. 2A and 2B are side views respectively showing states of use of the image display device by an adult male user in a standing posture and by an adult male user seated in a wheeled chair;
FIGS. 3A and 3B are side views respectively showing states of use of the image display device by a child user in the standing posture and by a child user seated in the wheeled chair;
FIG. 4 is a perspective view showing a state where the user seated in the wheeled chair is operating the image display device of the present invention;
FIG. 5 is a front view showing the image display device of the present invention;
FIG. 6 is a plan view showing the image display device of the present invention;
FIG. 7 is a left side view showing the image display device of the present invention, with a left leg described by an imaginary line;
FIG. 8 is a schematic block diagram showing the image display device of the present invention;
FIG. 9 is a schematic side view showing a positional relation of a bar to a display and a floor surface;
FIG. 10 is a side view showing a guard involving the use of a different frame;
FIG. 11 is a view showing a state where a display screen containing a virtual reality image appears;
FIG. 12 is a view showing a state where the display screen containing a virtual reality image resulting from shift of a viewpoint to an inner side through touch panel operation appears;
FIG. 13 is a view showing a state where the display screen having a displayed virtual reality image resulting from shift of the viewpoint to the left through the touch panel operation appears;
FIGS. 14A and 14B are side views respectively showing states of use of the image display device equipped with no guard by the adult male user in the standing posture and by the adult male user seated in the wheeled chair;
FIGS. 15A and 15B are side views respectively showing states of use of the image display device equipped with no guard by the child user in the standing posture and by the child user seated in the wheeled chair;
FIG. 16 is a schematic front view showing a state of use of the image display device equipped with no guard by more than one child user;
FIG. 17 is a schematic front view showing a state of use of the image display device of the present invention by more than one child user;
FIG. 18 is a schematic block diagram showing a different embodiment of the image display device; and
FIG. 19 is a schematic front view showing a relation between a bar having a description of raised letters and the display screen.

### BEST MODE FOR CARRYING OUT THE INVENTION

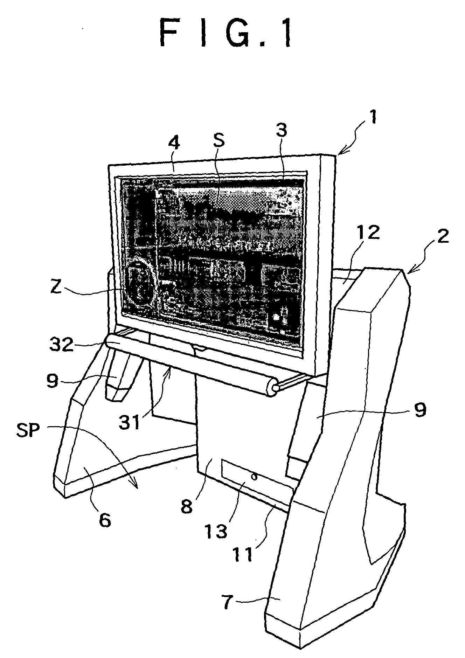

FIG. 1 is a perspective view showing an image display device of the present invention. The present image display device is composed of a large-sized display unit 1 with a flat plasma display 3 fitted in an outer frame 4, and a stand 2 specified as a support for supporting the display unit 1. The stand 2 has speaker units 9 at left and right sides. A video such as a static image, a movie image, and a virtual reality image (a VR image) is displayed on a display screen S of the display unit 1, while a voice is outputted through the speaker units 9.

The plasma display 3 has the high-contrast flat display screen S of a 50-inch size (about 1100 mm in width and 610 mm in height). The plasma display 3 is fitted to an inner side than a surface of the outer frame 4 of the display unit 1. A different level portion Z exists between the display screen S and the outer frame 4. The display unit 1 is equipped with a touch panel, in which case, the display screen S provides a touch panel face all over the whole surface.

Data like one supposed to be provided when clicking or moving a mouse is externally outputted from the display unit 1 by effecting touch operation of bringing a pen-type device or a human finger etc. into touch with the display screen S, or shifting, on the display screen S, the above device or the finger in touch with the display screen S, or alternatively, by bringing the above device or the finger etc. close to the display screen S, or shifting, on the display screen S, the above device or the finger in close proximity to the display screen S.

Operation of bringing the finger into direct touch with the display screen S, and operation of bringing the finger close to the display screen S are hereinafter referred to as touch operation all together. The present embodiment is adapted to externally output, from the display unit 1 by the touch operation given to the display screen S with the finger, data like one supposed to be provided when clicking or moving the mouse.

A computer for performing display on the display screen S and voice output control is housed in the stand 2. The computer is operated with output data based on the above touch operation.

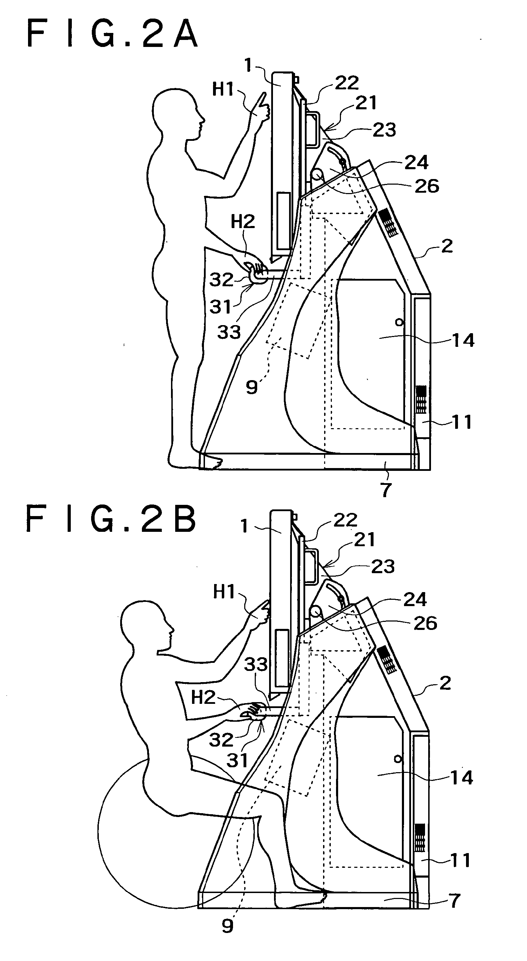

As shown in FIGS. 2A and 2B to 4, the above configuration permits an operator of the present image display device to operate the computer by the touch operation given to the display screen S for changing display on the display screen S or outputting a predetermined voice. Meanwhile, a viewer who is viewing and listening to information provided from the present image display device may enjoy the image displayed and the voice outputted in accordance with the above operation, or may obtain information from the above image and the above voice.

The present image display device has the display screen as large as the 50-inch size, and is thus capable of displaying the above information for a large number of persons as viewers being present in front of the image display device.

For instance, installation of the present image display device in places such as a station and a city hall to display information such as a civic homepage and a map for prevention of disasters permits the displayed information to be easily distributed to many and unspecified persons being present in front of the image display device.

Further, installation of the present image display device in places such as an art museum, a museum and a showroom of a general company to display a VR image of pictures and sculptures or like works of art, exhibits in the museum, structures, landscapes, and merchandise items etc. permit the above pictures etc. to be displayed in the form of the VR image for customers or many and unspecified persons with reality and full presence.

The present image display device is capable of not only displaying the information as described the above, but also providing information distributing operation interactively by the touch operation, permitting various information to be displayed in a switching manner through the operator's touch operation. When the display is given in the form of the above VR image, operation such as rotation is also made executable.

Incidentally, the operation of the present image display device involves the touch operation as described the above, so that the operator does not need to be an operator specializing in operation. That is, the above viewer oneself may take an operator's position. Thus, in the present specification, the viewer and the operator are hereinafter referred to as a user all together. FIGS. 2A and 2B to 4 illustrate one instance where the user is viewing and listening to information provided from the image display device, while operating the image display device.

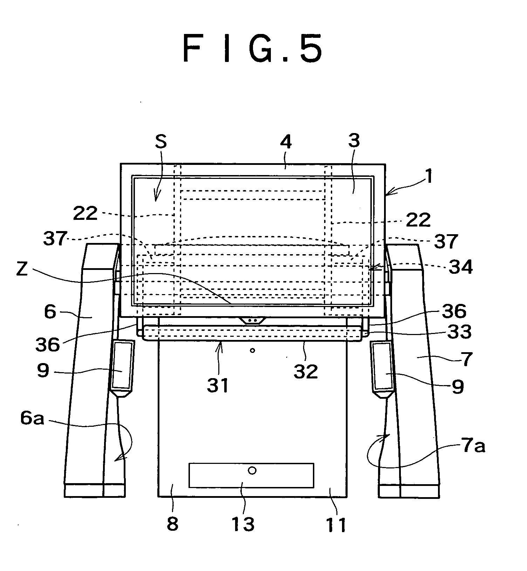

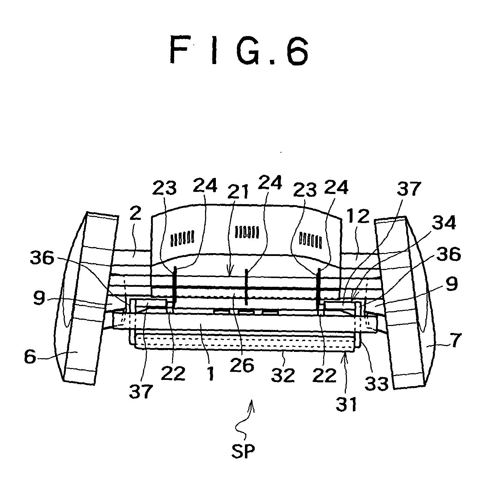

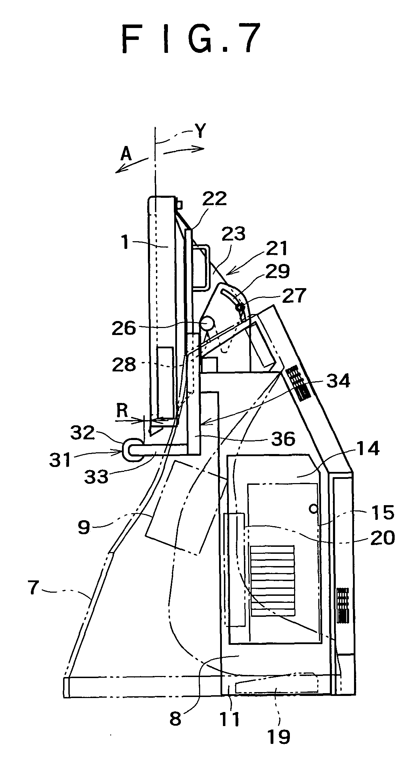

As shown in FIGS. 5 to 7, the stand 2 has left, right, and center legs 6, 7, 8, and the legs 6, 7, 8 are integrally connected together at upper end portions. The left and the right legs 6, 7 are both configured with an inside frame covered with a sheath. The above speaker units 9 are respectively mounted to inside faces 6a, 7a of the left and the right legs 6, 7.

The left and the right legs 6, 7 both extend from the front to the rear of the display unit **1**, and the center leg 8 is located at the rear of the display unit 1 so as to be in the center between the left and the right legs 6, 7. The stand 2 supports the display unit 1 in a center position of the stand 2 so as to be above a space SP enclosed with the left and the right legs 6, 7 and the center leg 8. The left and the right legs 6, 7 are adapted to support both the left and the right sides of the display unit 1, and the center leg 8 is adapted to support the rear in the center of the display unit 1.

The above structure of the stand 2 permits the stand 2 to be installed on the floor without providing any difference in level between the left and the right legs 6, 7 supposed to be located at a fore side of the display unit 1. Thus, as shown in FIGS. 2A, 3B and 4, a wheeled chair user may wheel to the front of the display 1 in a barrier free condition to take a user's position of the present image display device without being different from a physically sound user.

The present image display device ensures that a range of a position where the touch operation may be given to the display screen S with the finger of the user being present in front of the display screen S is specified as an operational area. The user needs to always take one's position within the above operational area when carrying out the touch operation with one's finger. The farthest position of the operational area from the display unit is as distant as about 60 cm from the display screen S.

When a standing adult user takes one's position in the lateral center of the display screen S within the operational area, the display screen S of the display unit 1 is supposed to cover an approximately whole range permitting steady view based on a perceptible visual field in cooperation of the eyeball with an action of the head of the user viewing face-to-face the display screen from the front.

Using the display unit 1 having the display screen S of the size enough to cover the approximately whole range permitting the above steady view may approximately cover the above steady view of the user with the display on the display screen S. However, a lateral width of the display screen S needs to be as large as a width enough to permit the standing adult user taking one's position in the lateral center of the display screen S to touch both left and right limits of the display screen S.

With considerations of the above requirements, although depending on a standing position of the user, using the display having the display screen S as large as the size of about 40 to 70 inches as the display unit 1 is supposed to cover the steady view of the user with the display on the display screen S, and also, to permit the standing adult user taking one's position in the lateral center of the display screen S to touch both the left and the right limits of the display screen S.

Then, use of the display unit 1 having the above display screen S for displaying the contents of the VR image may ensure that VR effects are highly obtained. This is because covering of the steady view of the user with the display on the display screen S causes the attention of the user taking one's position within the operational area to be almost all turned to the VR image displayed on the display screen S and the voice outputted through the speaker units 9, in which case, a user's concentration is laid on the display screen S, and as a result, the user may immerse oneself in the VR image to have a view of the virtual reality image with full presence.

Thus, use of the display having the display screen S as large as the size of about 40 to 70 inches may realize, easily at lower cost, installation of the image display device that provides expressive capability approximately equal to that of an immersed-type virtual reality system without requiring a special system such as a large-sized dome, and is smaller-sized enough to meet display of the VR image with full presence, as compared with the above special system such as the large-sized dome.

Meanwhile, no need to allow the user to immerse oneself in the VR image displayed on the display screen S and the voice outputted through the speaker units 9 may involve a case where the display screen S is not always necessary to be as large as the size enough to cover the approximately whole range permitting the steady view of the user being present within the operational area.

The center leg 8 is composed of a box part 11 and a connection part 12 serving to integrally fix the left and the right legs 6, 7. The connection part 12 protrudes from the box part 11 outwardly to the left and the right sides, and has a left end with the left leg 6 fixed thereto, and a right end with the right leg 7 fixed thereto. The computer 15, an interface (a keyboard 19 etc.) of the computer 15, and an UPS (Uninterruptible Power Supply) 20 etc. are housed in the box part 11 so as to be mounted on the bottom of the box part in separate arrangements into more than one stage.

The keyboard 19 etc., when being used, is supposed to be drawn out of the box part 11 through a drawer 13 arranged at a front face of the center leg 8. The computer 15 is given maintenance etc. through a pivotally movable door 14 arranged at a side face of the center leg 8.

The computer 15 is of a high-end type adaptable to display the VR image smoothly, and requires a large weight. Further, the UPS 20 needs to contain a battery, and is also large in weight. The center of gravity of the stand 2 is placed at a lower part of the rear in the lateral center on the grounds that the computer 15 and the UPS 20 respectively supposed to be heavyweight are arranged at the lower part of the rear of the stand 2. The position of the center of gravity of the stand 2 ensures that the present image display device is installed in a stable condition so as to be well back-and-forth balanced with the heavyweight display unit 1 supported at the fore side of the center leg 8, and is thus prevented from falling down forwards or backwards.

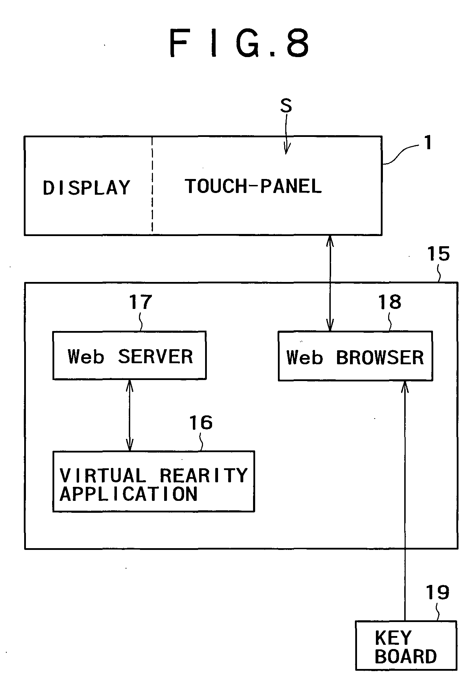

The computer 15 configures a VR image display system. A prescribed operation system (OS) is installed in the computer 15, in which case, as shown in FIG. 8, there is provided installation of a virtual reality application 16, a web server 17, and a web browser 18 etc. that are supposed to be operated on the OS. Video output of the computer 15 is connected to the display unit 1. Voice output is connected to the speaker units 9. Touch panel output of the display unit 1 is inputted to the computer 15.

The virtual reality application 16 outputs data to the web server 17. The VR image outputted from the web server 17 is displayed on the web browser 18. The web browser 18 is screenful-displayed on the display screen S, so that the VR image is supposed to be displayed over the whole surface of the display screen S. The voice is sounded through the speaker units 9. The web browser 18 and the virtual reality application 16 accept data through the mouse, and are thus supposed to accept touch panel output. The above structure of the computer permits the user to take advantage of the present image display device by the touch operation as described the above, like the operation with the mouse.

The interface such as the keyboard 19 etc. connected to the computer 15 is normally available for maintenance, and is limited in use to only a maintenance operator. In other words, use of the above interface is not required for general users. Thus, the above interface is housed in the drawer 13 as described the above, and, when being used for the maintenance etc., is drawn out of the drawer at need.

A support unit 21 is arranged between the stand 2 and the display unit 1. The support unit 21 is composed of a vertically longitudinal frame 22, a plate 23 mounted to the longitudinal frame 22, a bracket 24 fixed to the center leg 8 of the stand 2, and a horizontal support rod 6 etc. supported with the bracket 24.

The longitudinal frame 22 is mounted to each of the left and the right sides of the display unit 1 in such a manner as to be fixed to the back surface of the display unit 1 by bolting. The plate 23 protrudes in a direction opposite to the display unit 1, and has a concave portion 28 adapted to make pivotal engagement with the support rod 26 from an upper side. There is provided a bolt 27 at a protruding end side of the plate 23.

The bracket 24 has a circular arc-shaped slot 29. The bracket 24 is mounted to the longitudinal frame 22 through the plate 23 by inserting the bolt 27 of the plate 23 into the slot 29 of the bracket 24 after bringing the concave portion 28 of the plate 23 into pivotal engagement with the support rod 26 from the upper side.

The bracket 24 is mounted to the plate 23 so as to be capable of being swung with the support rod 26 specified as an axis of a supporting point. Then, the bracket 24 is integrally fixed to the longitudinal frame 22 at a prescribed angle by integrally fixing the plate 23 to the bracket 24 with an appropriate frictional force after fitting a nut to the bolt 27 by screwing.

The display unit 1 is mounted to the stand 2 so as to be capable of being swung in a direction A ensuring that the display screen S is turned upward and downward. After a swing angle of the display unit 1 is adjusted by loosening the nut, the display unit 1 may be positioned at a prescribed swing angle of the display unit 1 by tightening the nut to reach the above swing angle. The support rod 26 is located in the vicinity of the vertical center of the display screen S, in which case, the display unit 1 is swung with the vicinity of the vertical center of the display screen S as an axial center.

On the basis of the display unit 1 in a vertical state where a plane Y including two points contained in at least a lower-side boundary line out of boundary lines of the display screen S to the display unit **1**, and one point contained in the other boundary line is specified as a vertical plane, the support unit 21 of the present embodiment allows the display screen S to be swung such that the upper side of the above plane is turned back and forth. The vertical state of the display unit 1 ensures that the display screen S is turned in an approximately horizontal direction of the front. Incidentally, the display screen S of the display unit 1 takes a flat shape, so that the above plane Y results in a plane including the display screen S.

A guard 31 for preventing erroneous operation involved in the touch operation given to the display screen S is arranged integrally at the display unit 1. The guard 31 is composed of a cylindrical-shaped bar 32 made of a soft elastic material such as polyurethane, and a frame 33 extending through the center of the bar 32.

The frame 33 extends through the center of the bar 32, and takes a channel-like shape as viewed in plan, with left and right ends bent toward the stand 2. The opposite ends of the frame 33 are fixed to the longitudinal frame 22 through a mounting part 34. The mounting part 34 is composed of a longitudinal rod 36 upwardly extending while being fixed to each of left and right rear ends of the frame 33, and a horizontal rod 37 provided in a horizontally protruding arrangement at an upper end of the longitudinal rod 36, and fixed to the frame 22.

The guard 31 is mounted to the display unit 1 in a state where the bar 32 is arranged to protrude forwards from the front surface of the display screen S so as to provide a predetermined interval R between the bar 32 and the front surface of the display unit 1. The bar 32 is arranged to at least extend horizontally over the whole width of the display screen S.

The guard 32 is mounted to the display unit 1 through the mounting part 34 as described the above, so that the bar 32 is always positioned to protrude forwards from the front surface of the display screen S, even if the display unit 1 is swung up to any possible angle. An object, including the human body, facing to the display unit 1 makes contact with the bar 32 over the whole width of the display screen S, and is thus prevented from contacting the display unit, particularly, the display screen S, so that contact in the width direction within the range applicable to the touch operation is completely prevented.

The bar 32 is also useful as a handle for operation of swinging the display unit 1, in addition to a function as the guard. The user of the present image display device may take hold of the bar 32 as the handle to swing the display unit 1 for adjusting the state where the steady view of the user is approximately covered with the display screen as described the above, or a position and an angle suited for more than one user to view the display on the display screen S.

Use of the bar 32 as the handle permits the user to effect the adjustment of an angle position of the display unit 1 without needing to touch the display unit 1, particularly, the display screen S unnecessarily, thereby preventing disadvantages of contaminating or damaging the display screen S in the case of the adjustment of the angle position of the display unit 1.

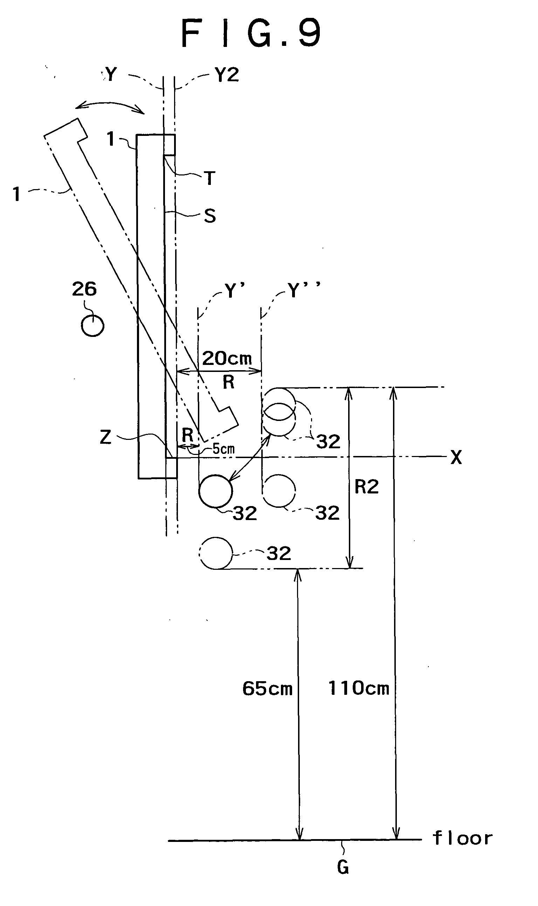

Arrangement of the guard 31 is now described in detail. As shown in FIG. 9, the height of the guard 31 to the display unit 1 is set to ensure that the bar 32 is located within a space lower than a plane X being perpendicular to the above plane Y and including two points contained in the lower-side boundary line of the display screen S included in the above plane Y to the display unit 1.

The height of the guard 31 also needs to meet the requirement under which the wheeled chair user may wheel to a space between the bar 32 and a floor surface G of the present image display device, in addition to the requirement for the height to the display unit 1. Thus, the bar 32 is not to be located within a general working area of the wheeled chair user at least.

However, the display unit 1 is supposed to be arranged to have a height enough to permit the adult user in the standing posture to give the touch operation with one's finger to the whole of the upper limit of the display screen S as shown in FIG. 2A, and also, to permit the adult user seated in the wheeled chair to give the touch operation at least to a lower part of the display screen S as shown in FIG. 2B. Thus, the height of the guard 31 is set to meet also the requirements for the arrangement of the display unit 1.

Thus, when a mean reach of a fingertip of an ordinary adult user when effecting the frontward touch panel operation in the standing posture is set at 180 cm, and a mean reach of a fingertip of an ordinary adult user when effecting the frontward touch panel operation in the seated posture is set at 110 cm, the installation level of the guard is assumed to be as high as a level enough to include the bar 32 within the space between planes respectively spaced from the floor surface G by 65 cm and 100 cm in the vertical direction, as a result of putting the above three requirements together.

The above reach of the fingertip is derived based on that the mean reach of the fingertip of the ordinary male and female users when stretching one's hand upwards vertically in the standing posture is assumed to be as high as 206 cm in the case of the male users, and 188 cm in the case of the female users, and averages 181.6 cm in the case of the male and the female users, and that the mean reach of the fingertip of the ordinary adult male and female users when stretching one's hand upwards vertically in the seated posture is assumed to be as high as 136 cm in the case of the male users, and 125.6 cm in the case of the female users, and averages 120 cm in the case of the male and the female users.

The present embodiment is adapted to determine the height of the display unit 1 and the installation level of the guard 31 such that the axial center of the bar 32 is spaced from the floor surface G of the stand by about 80 cm, provided that the display 3 having the display screen S of the 50-inch size is used.

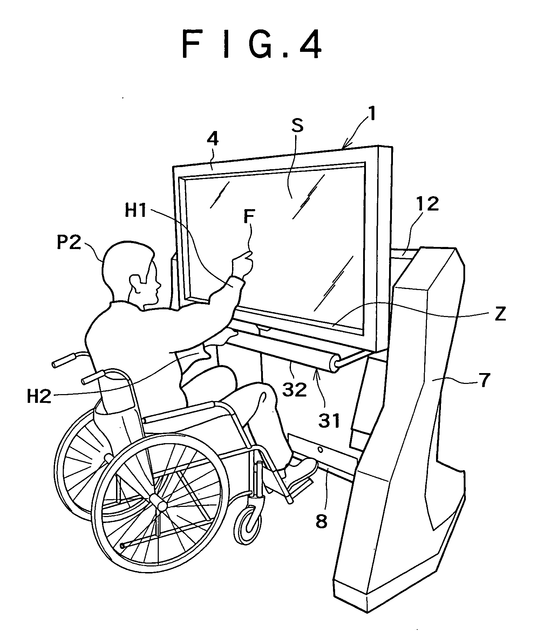

Thus, as shown in FIGS. 2B and 4, the wheeled chair user may also take the user's position by wheeling to the inside of the operational area in the barrier free condition such that a wheeled chair may not be interfered by the bar 32. However, an attempt made by the user to get closer to the display screen S than necessary causes the user to be struck by the bar 32, so that the contact between the user and the display screen S is prevented as described the above.

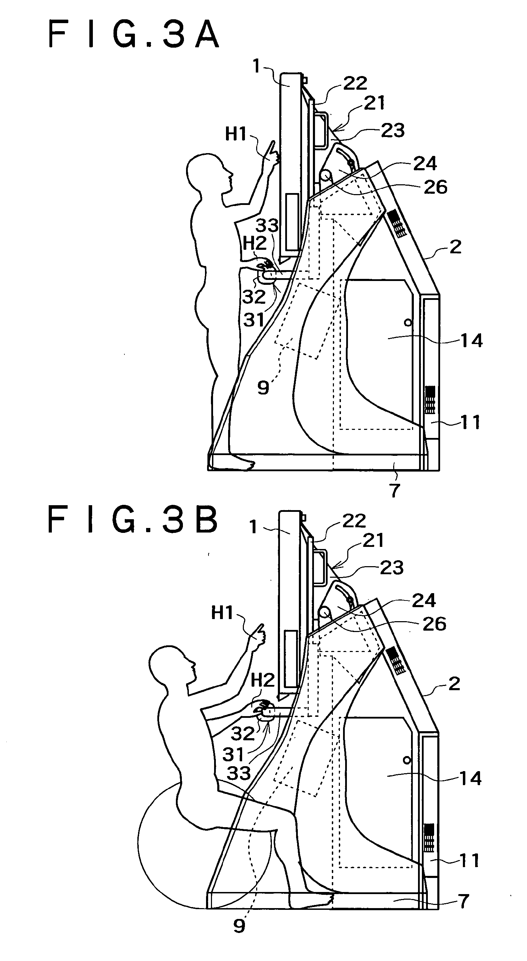

As shown in FIGS. 3A and 3B, in the case of a child user in the standing posture (assumed to be a five year's-old child of about 1100 mm in standard height), the bar 32 assumes its position approximately as high as the elbow level of the above user (the child) with one's arms let down naturally. As shown in FIGS. 2A and 2B, in the case of the adult male user (assumed to be about 170 cm in height), the bar 32 assumes its position lower than the elbow level, with one's arms let down naturally. As shown in FIGS. 2B and 3B, in the case of the wheeled chair user, the bar 32 assumes its position higher than the elbow level, with one's arms let down naturally, in either case of the adult and child users.

Then, judging from the height of the bar 32 of the display unit 1 in the vertical state as a reference, the above elbow levels of the users inclusive of the standing adult male user and the child user seated in the wheeled chair fall in the range of about +30 to - 30 cm spaced from the bar 32. That is, the bar 32 is supposed to be arranged approximately in the vicinity of the above elbow level of the users.

Incidentally, the height of the bar 32 varies depending on the degree of swinging of the display unit 1. The swinging of the display unit 1 is required to adjust the display unit 1 to reach the position and angle suited for the user to view the display on the display screen S as described the above.

However, the adjustment of the position depends on each individual user, and the bar 32 corresponding to the position of the display unit having been adjusted to reach the prescribed angle assumes its position in the vicinity of the elbow level of the user having given the angle adjustment to the display unit 1, in which case, the elbow level of this user falls in the range of about +30 cm to -30 cm spaced from the bar 32.

Meanwhile, the guard 31 is mounted such that the interval R between the bar 32 and the display unit 1 is limited, as a minimum, to a size enough to prevent the finger pushed out forwards with the bar 32 grasped from touching the display screen S or reaching close to the display screen S to the degree to which the touch panel is allowed to react, and, as a maximum, to a size enough to hardly permit any person to step into the interval R.

Specifically, as shown in FIG. 9, assuming that the plane extending in parallel to the above plane Y and including a farthest point of the outer frame 4 in the display unit 1 in the direction perpendicular to the above plane Y is a reference plane Y2, the back-and-forth mounting position of the guard 31 to the display unit 1 is set to ensure that the closest portion of the bar 32 to the display screen S makes plane-, line- or point-contact with planes Y', Y" translated from the reference plane Y2 by a vertical distance ranging from 5 cm at a minimum to 20 cm at a maximum.

The minimum vertical distance from the reference plane Y2 is set based on a length of 5 cm that is assumed to be the mean length from the fingertip to the second joint of the human finger. Setting of the above minimum vertical distance is supposed to be given on the ground that when the bar 32 is grasped, the front end of the bar 32 assumes its position in the vicinity of the second joint of the forwardly pushed-out finger. Thus, when the user takes hold of the bar 32 as a handrail as described the above, an action of pushing out one's hand forwards with the bar 32 grasped brings about no reaction of the touch panel, thereby preventing disadvantages in that an unexpected reaction of the touch panel leads to a failure to accept other operations.

On the other hand, the maximum vertical distance from the reference plane Y2 is set based on a length of 20 cm that is assumed to be the mean diameter of the human head, so that the danger in which the head of the adult user is caught in or the child steps into the space between the bar 32 and the display screen S is extremely small. Further, a space of 20 cm is too narrow as a space for the user to hang down from the bar 32, so that the user, particularly, the child user is prevented from hanging down from the bar 32.

The guard 31 is mounted as described the above, so that the bar 32 is arranged approximately in the vicinity of the elbow level of the user so as to be in a position protruding forwards from the front surface of the display screen S, no matter how the swing angle of the display unit 1 is given, as described the above. The swing angle of the display unit 1 is set such that the position of the bar 32 may not be beyond the above range due to the swinging of the display unit 1. In the present embodiment, the swing angle is in the range of about -15 to +15 degrees on the basis of the vertical state.

Then, the guard 31 is mounted to the display unit 1 according to the above positional relation, so that when the user views the display screen S with one's eyes turned in a direction perpendicular to the display screen S, the bar 32 causes no obstruction to the display screen S even if the display unit 1 is tilted in what manner, and as a result, view on the display screen S is not interfered by the bar 32. Thus, the viewer may view the display on the display screen S without needing to shift one's eye position to avoid the bar 32.

Further, when the user moves one's arm slightly up and down, contact between one's hand and the bar 32 occurs. This is because the mean length from the elbow to the hand is assumed to be 30 cm in a bent state of the elbow, and an area of operation with the user's hand in the case of the standing adult user letting down one's hand or the wheeled chair user stretching one's hand upwards falls in the range of -30 to +30 cm with the bar 32 as a reference level.

For this reason, the bar 32 is also used as the handrail, so that the operator may effect the above touch operation while maintaining a stabled posture with the bar 32 grasped with one's hand opposite to one's hand engaged in the touch operation. Then, the bar 32 serves both as the handrail and the handle adapted to adjust the angle position of the display unit **1**, so that any need to provide the handrail and the handle separately from the guard 31 is eliminated.

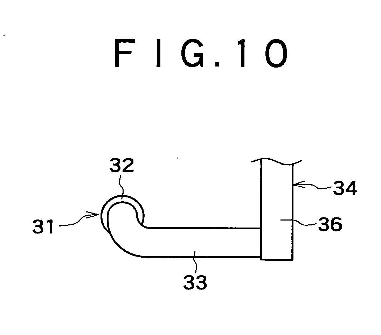

Incidentally, as shown in FIG. 10, the frame 33 may be also configured to have the bar 32-side that is curbed or bent upwards as viewed from the side. This configuration permits positioning of the bar 32 to be easily carried out even at the time when the frame 33 needs to be fixed in position at the inner side than the display screen S. Further, a strength against a force applied to the bar 32 in the up-and-down direction may be increased.

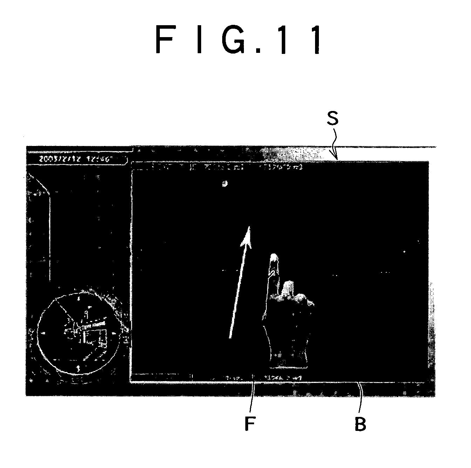

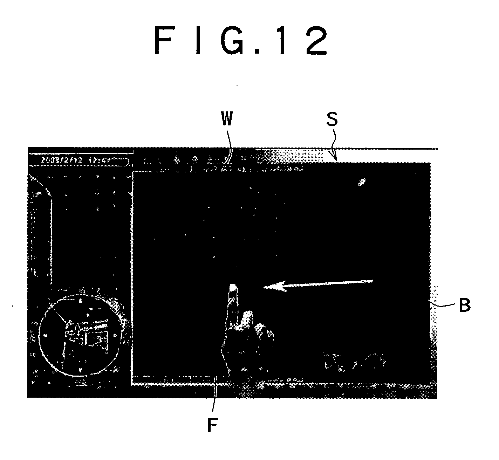

One application instance of the present image display device and operations of the guard 31 are now described based on the display screen. It is assumed that the VR image of a virtual landscape is displayed on the display screen S as shown in FIG. 11, for instance. The user touches the display screen S with one's finger F in this condition, and shifts one's finger F toward the fore side of "Bridge B" contained in the VR image, that is, toward an upper side in the display screen S from a physical point of view, or an inner side from an imaginary point of view, while keeping in touch with the display screen S, as shown in FIG. 12. This permits the VR image in FIG. 11 to be switched to the VR image in FIG. 12 just as the user's eye position is shifted to the inner side of the VR image displayed on the display screen S, and as a result, display is provided as if the user reached closer to "Bridge B".

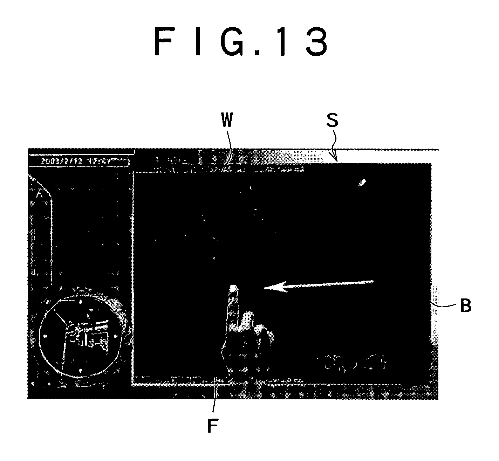

Further, the user shifts one's finger F being in touch with the display screen S from the state in FIG. 11 toward the left of "Bridge B" contained in the VR image, that is, toward the left in the display screen S, while keeping in touch with the display screen S, as shown in FIG. 13. This permits the VR image in FIG. 11 to be switched to the VR image in FIG. 13 just as the user's eye position is shifted to the left of the VR image displayed on the display screen S, and as a result, display is provided as if the user had a view of "Willow W by the side of Bridge".

In this case, the display screen S approximately covers the steady view of the user taking one's position within the above operational area, the user may view the VR image with more full presence, as compared with other users being present outside the operational area. However, the steady view is approximately covered with the display screen S, the frontward attention of the user within the operational area is almost turned to the display screen S.

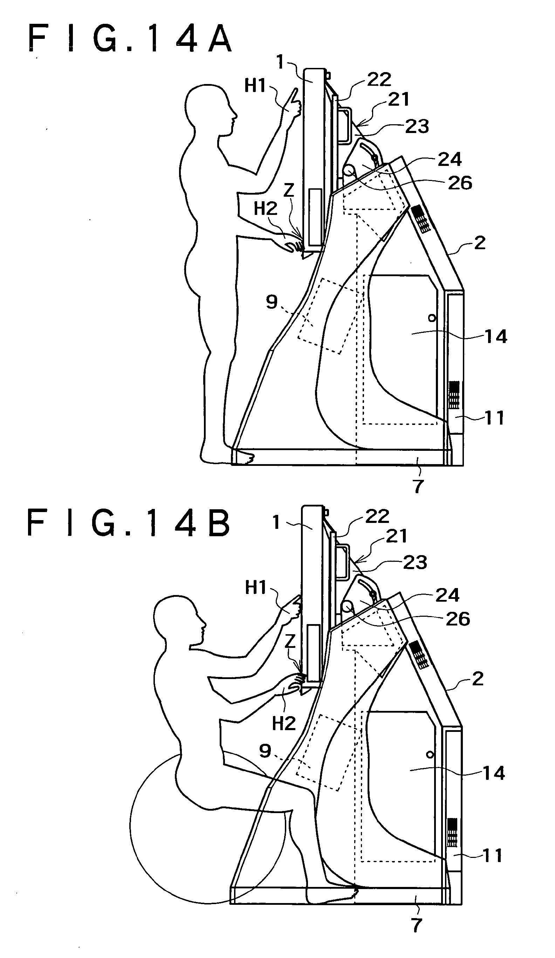

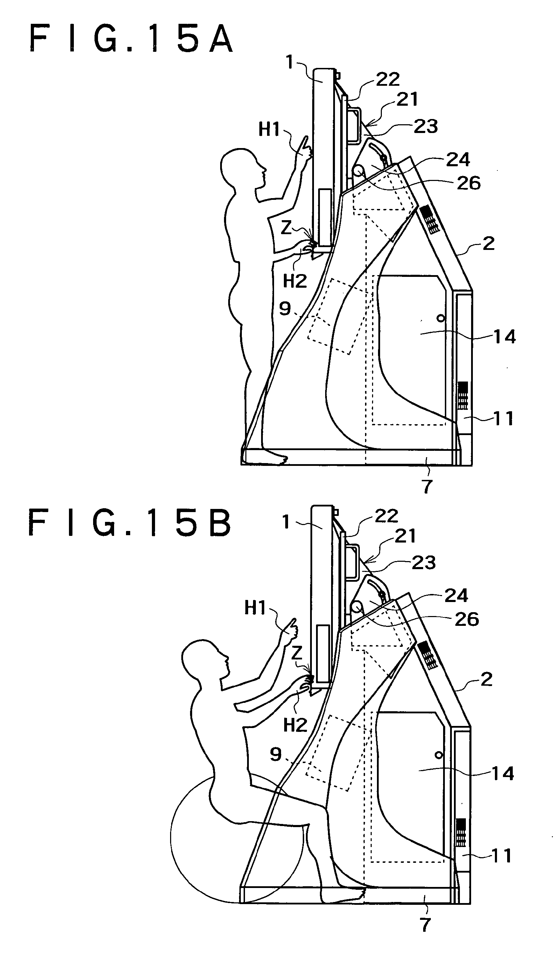

Thus, the user is often liable to be neglectful taking care about one's hand H2 opposite to one's hand H1 engaged in the touch operation, or about one's hand H1 at the time when no touch operation is required, before one knows. In this case, if the guard 31 is not equipped, the bar 32 is not existent within the area of operation with the user's hand as described the above, as shown in FIGS. 14A, 14B, 15A and 15B. Thus, the different level portion Z between the display screen S of the display unit 1 and the frame 4 assumes its position in the vicinity of the elbow level of the user, in which case, when the user moves one's arm slightly up and down, the contact between one's hand and the different level portion Z occurs. Thus, the user unconsciously makes use of the different level portion Z between the display screen S and the frame 4 as the handrail, which brings about touch of one's finger etc. with or proximity thereof to the display screen S, leading to the reaction of the display screen S.

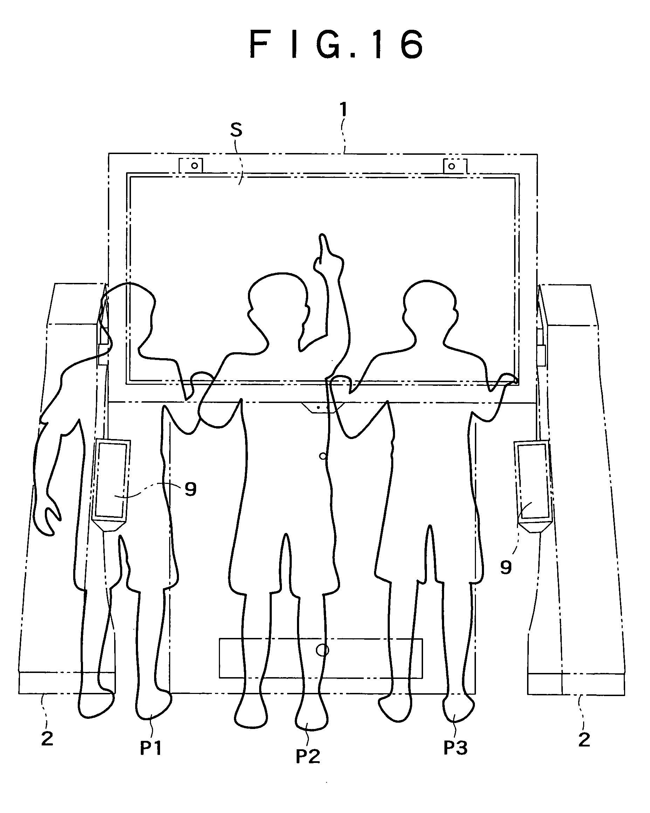

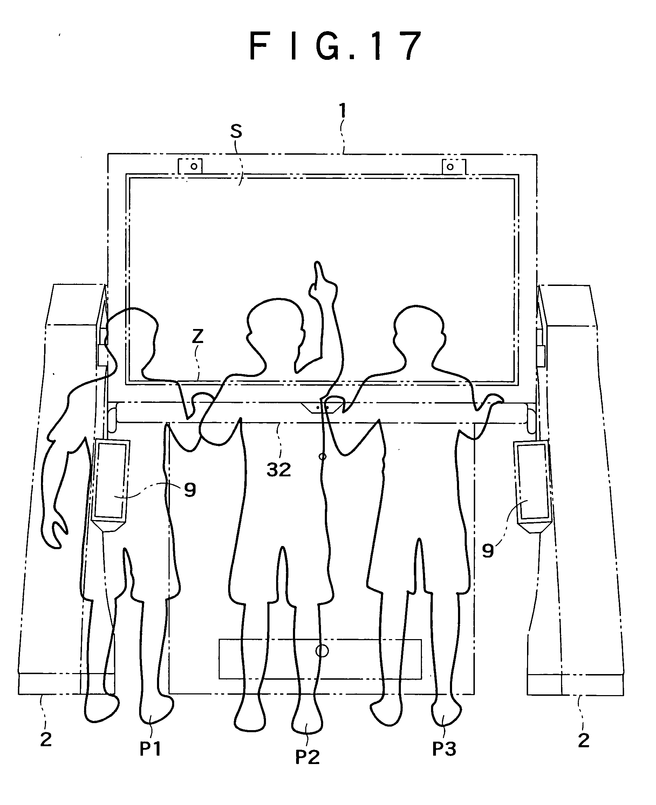

Particularly, in the case of the child users, about three users may occupy the range in the width direction of the present image display device, as shown in FIGS. 16 and 17, and, owing to the child users, it is not rare the case where these users are so absorbed in viewing the display image as to become almost neglectful taking care about one's hands and fingers. In this case, the absence of the guard 31 involves a situation where the touch of one's finger etc. with or the proximity thereof to the display screen S occurs with one's hand resting on the different level portion Z, leading to the reaction of the touch panel.

When the user's body or finger etc. touches or reaches close to the display screen S, the touch panel reacts at a touch position or a position close to the display screen, resulting in a failure to take effect on original touch operation. Particularly, in the case of the child users, it is difficult to specify whether or not the system is in a hang-up condition, whether or not someone among the users is in touch with or in proximity to the display screen S by mistake, or which of the users is being in touch with or in proximity to the display screen S when someone among the users makes touch with or reaches close to the display screen S by mistake.

However, the present image display device is equipped with the guard 31 as described the above to bring the user into contact with the bar 32, when reaching closer to the display screen S than necessary, so that the user may be prevented from carelessly making direct touch with the display unit 1, particularly, the display screen S, as described the above. Further, the user makes use of the bar 32 as the handrail, and thus may effect the touch operation by taking hold of the bar 32 with one's hand H2 opposite to one's hand H1 engaged in the touch operation, while keeping the stabled posture. The user takes hold of the bar 32 as the handrail with one's hand H2, so that contact between one's hand H2 not engaged in the touch operation and the display screen S is prevented.

Particularly, in the case of the child users, more particularly, although about three child users occupy the range in the width direction of the present image display device, and, in this state, are so absorbed in viewing the display image as to become almost neglectful taking care about one's hands or fingers, these users are supposed to take hold of the bar 32 as the handrail as shown in FIG. 17, so that the situation where the touch of one's finger etc. with or the proximity thereof to the display screen S occurs with one's hand resting on the different level portion Z is avoided.

However, using the display screen S of a small size does not involve the case where the users are so absorbed in the display image as to become almost neglectful taking care about one's hands or fingers as described the above. In other words, the above case is supposed to be one peculiar to the large-sized display. Thus, the display 3 of the image display device adaptable to one subject matter of the present invention is specified as a display with the large-sized display screen S, specifically, the display screen as large as the size of about 40 inches exceeding 30 inches, on the assumption that the user is so absorbed in the display image as to become almost neglectful taking care about one's hands or fingers.

One instance when the image displayed on the display screen S is different from the VR image is now described. The present computer 15 is set to have a structure adaptable to display, on the display screen S, the contents composed of static images with priority given mainly to a text, while taking a means of following a link. The data for display is received from the web server 17 within the computer 15 or other hosts.

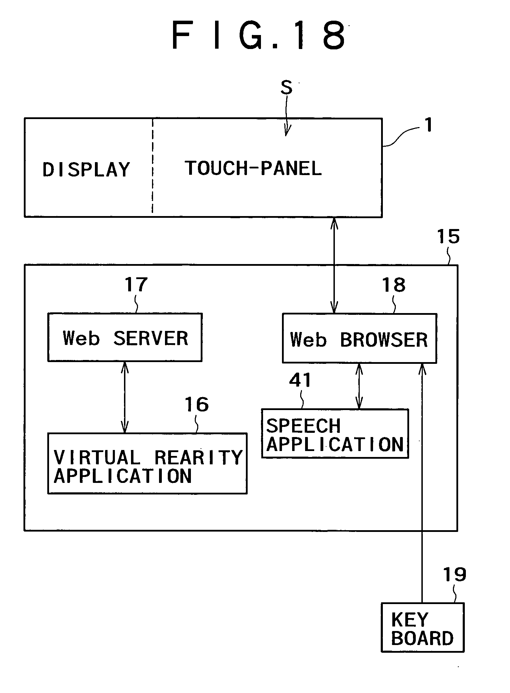

As shown in FIG. 18, a speech application 41 of giving information by reading out text data by voice is installed as a speech informing means in the computer 15. The speech application 41 is linked with the web browser 18 so as to permit characters displayed on the web browser 18 to be read out.

The speech application 41 reads out the link as one sentence, and, as to other characters, takes a means of bringing a cursor to the position on the displayed character to select this character for reading out from a selected character portion through an appropriate breakpoint in sequence. The operation of the speech application 41 is well known per se, and thus, a detailed description thereof is omitted.

The web browser 18 provides, for a lowermost display portion, display of menu icons 42 as commands for image display operation. The menu icons 42 contain characters representing operation instruction contents. The menu icons 42 displayed with the web browser 18 may be designed for the web browser 18 itself or at the web server side.

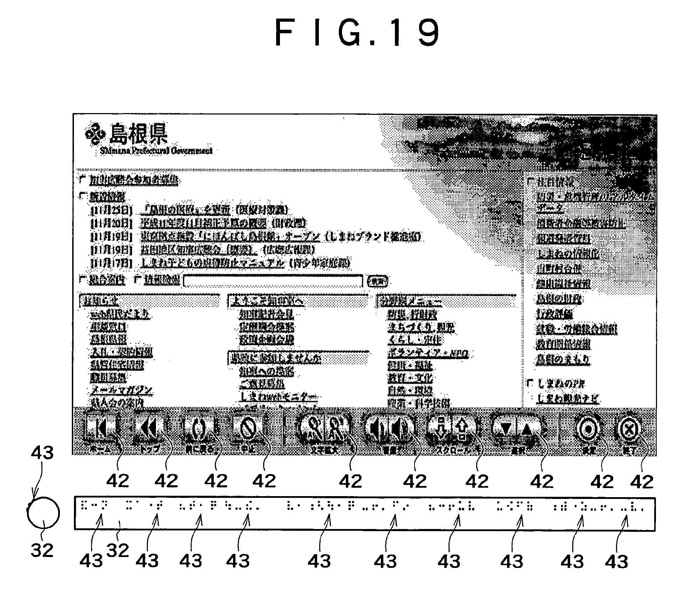

When the web browser 18 causes the static image transmitted from the web server to be displayed, an image as shown in FIG. 19 is supposed to be displayed on the display screen S. FIG. 19 shows one instance when a homepage of Shimane prefecture in Japan is displayed. When the predetermined character is selected through the cursor operation by the touch operation, the speech application 41 permits the selected character to be read out.

For instance, when one menu icon 42 is selected, the display operation based on the selected menu icon is supposed to be read out.

Meanwhile, raised letters 43 on the instruction contents of the display operation based on each menu icon 42 are arranged, as operation instruction content marks useful for a visually handicapped user, on a confronting surface portion of the bar 32 to the display screen S so as to be correspondent in position to each menu icon 42. Instead of the raised letters 43, uneven-shaped marks that are predetermined depending on the operation contents of the respective menu icons 42 are also available.

As described the above, the bar 32 is always located closer to the outer frame 4 in the up-and-down direction, that is, at a lower side than the lower-side boundary line of the display screen S to the outer frame 4. Further, each menu icon 42 is arranged at the lowermost part of the display screen S so as to be in a row in the lateral direction in the vicinity of the different level portion Z between the display screen S and the outer frame 4. The different level portion Z serves as an uneven-shaped mark indicating a beginning position of the display screen S.

The user in the case of the visually handicapped user firstly reaches the different level portion Z when following the upper positions of the raised letters 43 or the marks arranged on the bar 32. This different level portion Z functions as the uneven-shaped mark indicating the beginning position of the display screen S, in which case, the upside of the different level portion Z is identified as the beginning position of the display screen S. The menu icons 42 are arranged in a row at the beginning position of the display screen S, so that when the beginning position of the display screen S is identified by touching, the identified position, that is, the position right above the different level portion Z may be judged to be positions of the menu icons 42.

Then, the reaction of the touch panel to the menu icons 42 permits the display operation based on the menu icons 42 to be read out. Thus, whether or not the read-out menu icon 42 is a desired one may be ascertained by the user through the voice, permitting the user to carry out the operation of touching the desired menu icon 42 easily.

Incidentally, the raised letters 43 are arranged on the confronting portion of the bar 32 to the display screen S, so that the visually handicapped user is supposed to touch the raised letters 43 with the fingertip turned downwards. Thus, the raised letters 43 need to be arranged to be reverse in the up-and-down direction and the left-and-right direction.

Thus, the user in the case of a complete blind person having been conventionally not able to take advantage of the touch operation may also utilize a touch panel terminal by following the raised letters on the bar 32, resulting in realization of a barrier-free terminal.

Arrangement of a menu icon of a TAB key also permits the link on the display screen S to be read out in sequence, leading to a jump to the prescribed link just as the jump carried out by the physically sound user. As to the other characters, the operation of properly touching the display screen S is required. The display screen S is of the large size as described the above, so that the menu icons 42 may be spaced at relatively large intervals even if relatively large-sized graphic display is required, permitting the visually handicapped user to carry out the touch operation easily.

Thus, the display screen S at least requires the size enough to permit the menu icons to be displayed such that the menu icons are spaced and sized to permit the visually handicapped user to carry out the touch operation in such a manner as to discriminate between the menu icons 42 in the lateral direction. Thus, the display of a type having the display screen S of the size of more than about 40 inches exceeding 30 inches is supposed to be available.

Incidentally, the raised letters 43 may be also arranged at the outer frame 4, instead of the bar 32. Alternatively, the raised letters may be arranged longitudinally in a row on the outer frame 4 to provide the menu icons 42 in a longitudinally row arrangement. That is, the raised letters 43 are supposed to only meet the arrangement in a location other than the display screen S (the input means) so as to be correspondent with the menu icons 42.

With considerations of the requirements for the standing physically sound user to give the touch operation to the whole display screen S as described the above, and also, the installation level of the display unit **1**, the display as large as the size of about 40 to 70 inches may be used for the present image display device.

### INDUSTRIAL APPLICABILITY

In addition to the VR image display device, the present invention may be also used for a kiosk terminal. Further, the present invention is particularly applicable as the display of a computer for the visually handicapped user inclusive of the complete blind user, and thus may be utilized as a touch panel system that may be used by the complete blind user.

## Claims

1. In an image display device that has a display unit (1) with a display screen (S) for displaying an image of a specific object, a control device (15) at least adapted to display the image on said display screen (S) and also, to change a display image displayed on the display screen (S), and a support (2) for supporting the display unit (1), and further includes an input means arranged at one or both of the display screen (S) and a periphery (4) of said display unit (1) to perform, by touching or in proximity, input for changing the display image through the control device (15), a guard-equipped image display device, **characterized in that** a guard (31) for preventing erroneous operation of said input means is mounted to protrude forwards from a front surface of the display unit (1), and the upper limit of a height of said guard (31) is set so as not to interfere with view on the display screen (S) when a user is viewing the display screen (S) from the front.

2. In an image display device that has a display unit (1) with a display screen (S) for displaying an image of a specific object, a control device (15) at least adapted to display the image on said display screen (2) and also, to change the display image displayed on the display screen (S), and a support (2) for supporting the display unit (1), and further includes an input means arranged at one or both of the display screen (S) and a periphery (4) of said display unit (1) to perform, by touching or in proximity, input for changing the display image through the control device (15), a guard-equipped image display device, **characterized in that** a guard (31) for preventing erroneous operation of said input means is mounted to protrude forwards from a front surface of the display unit (1), the upper limit of a height of said guard (31) is set so as not to interfere with view on the display screen (S) when a user is viewing the display screen (S) from the front, the display screen (S) is in the form of a touch panel face serving to detect touch of a predetermined touching object with or proximity thereof to the display screen (S), and a locus of movement of the above object being in touch with or in close proximity to the display screen, and the input means is made up of a touch panel.

3. In an image display device that has a display unit (1) with a display screen (S) for displaying an image of a specific object, a control device (15) at least adapted to display the image on said display screen (S) and also, to change a display image displayed on the display screen (S), and a support (2) for supporting the display unit (1), and further includes an input means arranged at one or both of the display screen (S) and a periphery (4) of said display unit (1) to perform, by touching or in proximity, input for changing the display image through the control device (15), a guard-equipped image display device, **characterized in that** a guard (31) for preventing erroneous operation of said input means is mounted to protrude forwards from a front surface of the display unit (1), the upper limit of a height of said guard (31) is set so as not to interfere with view on the display screen (S) when a user is viewing the display screen (S) from the front, and the display unit (1) has the display screen (S) as large as a size of about 40 to 70 inches.

4. In an image display device that has a display unit (1) with a display screen (S) for displaying an image of a specific object, a control device (15) at least adapted to display the image on said display screen (S) and also, to change the image displayed on the display screen (S), and a support (2) for supporting the display unit (1), and further includes an input means arranged at one or both of the display screen (S) and a periphery (4) of said display unit (1) to perform, by touching or in proximity, input for changing the displayed image through the control unit (15), a guard-equipped image display device, **characterized in that** a guard (31) for preventing erroneous operation of said input means is mounted to protrude forwards from a front surface of the display unit (1), the upper limit of a height of said guard (31) is set so as not to interfere with view on the display screen (S) when a user is viewing the display screen (S) from the front, the display screen (S) is in the form of a touch panel face serving to detect touch of a predetermined touching object with or proximity thereof to the display screen (S), and a locus of movement of the above object being in touch with or in close proximity to the display screen, the input means is made up of a touch panel, and the display unit (1) has the display screen (S) as large as a size of about 40 to 70 inches.

5. The guard-equipped image display device according to claim 1, 2, 3 or 4, wherein the upper limit of the height of the guard (31) is set in position lower than the lower limit of the display screen (S), with the display screen (S) turned in an approximately horizontal direction of the front.

6. The guard-equipped image display device according to claim 1, 2, 3, or 4, wherein the guard (31) is made up of a horizontal bar (32).

7. The guard-equipped image display device according to claim 1, 2, 3, or 4, wherein the guard (31) is made up of a horizontal bar (31), and the upper limit of the height of the bar (32) is set in position lower than the lower limit of the display screen (S), with the display screen (S) turned in an approximately horizontal direction of the front.

8. The guard-equipped image display device according to claim 1, 2, 3, or 4, wherein the guard (31) is spaced from the display unit (1) by a predetermined distance so as to bring about no operation of the input means at the time when the user pushes out one's finger forwards with the guard (31) grasped, and also to prevent a person from stepping into a space between the guard (31) and the display unit (1).

9. The guard-equipped image display device according to claim 1, 2, 3, or 4, wherein the guard (31) is spaced from a front end surface of the display unit (1) by a distance of 5 to 20 cm so as to bring about no operation of the input means at the time when the user pushes out one's finger forwards with the guard (31) grasped, and also to prevent a person from steeping into a space between the guard (31) and the display unit (1).

10. The guard-equipped image display device according to claim 1, 2, 3, or 4, wherein the height of the guard (31) is set to ensure that the display unit (1) is arranged to have a height enough to permit a wheeled chair user to wheel to a space between the guard (31) and a floor surface (G), and also to be adaptable, by a standing user, to operate the input means positioned at a highest level.

11. The guard-equipped image display device according to claim 1, 2, 3, or 4, wherein the guard (31) is spaced from a floor surface (G) by a distance of 65 to 110 cm to ensure that the display unit (1) is arranged to have a height enough to permit a wheeled chair user to wheel to a space between the guard (31) and the floor surface (G), and also to be adaptable, by a standing user, to operate the input means positioned at a highest level.

12. The guard-equipped image display device according to claim 1, 2, 3, or 4, wherein the support (2) is structured to support the display unit (1) to be capable of being swung to ensure that the display screen (S) is turned upward and downward.

13. The guard-equipped image display device according to claim 1, 2, 3, or 4, wherein the support (2) is structured to support the display unit (1) to be capable of being swung to ensure that the display screen (S) is turned upward and downward, and the guard (31) also serves as a handle for operation of swinging the display unit (1).

14. In an image display device that has a display unit (1) with a display screen (S) for displaying an image of a specific object, a control device (15) at least adapted to display the image on said display screen (S) and also, to change the display image displayed on the display screen (S), and a support (1) for supporting the display unit (1), and further includes an input means arranged at one or both of the display screen (S) and a periphery (4) of said display unit (1) to perform, by touching or in proximity, input for changing the display image through the control device (15), a guard-equipped image display device, **characterized in that** a guard (31) for preventing erroneous operation of said input means is mounted to protrude forwards from a front surface of the display unit (1), the upper limit of a height of said guard (31) is set so as not to interfere with view on the display screen (S) when a user is viewing the display screen (S) from the front, more than one interface (42) for display image operation is adapted to be displayed on the display screen (S), the control device (15) is provided with a voice informing means (41) of giving, by voice, information of contents of operation executed with said interfaces (42), and marks (43) representing instruction contents of operation executed with the respective interfaces (42) and being useful in giving information on the above instruction contents to a visually handicapped user are arranged at a location other than the input means so as to be correspondent to the respective interfaces (42).

15. The guard-equipped image display device according to claim 14, wherein said marks (43) are arranged at the guard (31).

16. The guard-equipped image display device according to claim 14, wherein the guard (31) is made up of a horizontal bar (32), and the marks (43) are arranged at a confronting position of the bar (32) to the display screen (S) to permit the interfaces (42) to be displayed in the vicinity of the edge of the lower limit of the display screen (S).

17. The guard-equipped image display device according to claim 14, 15, or 16, wherein a lateral width of the display screen (S) is set to be as large as a width enough to permit the interfaces (42) to be displayed in a horizontal row arrangement such that the interfaces are spaced and sized to permit the visually handicapped user to carry out touch operation in such a manner as to discriminate between the interfaces (42) in the lateral direction.
